# EUROPEAN PATENT SPECIFICATION

(11) **EP 4 581 768 B1**
(45) Date of publication and mention of the grant of the patent: **29.07.2026**
(21) Application number: 23762523.1
(22) Date of filing: 01.09.2023
(51) Int. Cl.: H04B 10/90, H04B 3/52

(54) **MILLIMETRE-WAVE COMMUNICATION SYSTEM**
MILLIMETERWELLEN-KOMMUNIKATIONSSYSTEM
SYSTÈME DE COMMUNICATION À ONDES MILLIMÉTRIQUES

(30) Priority: 02.09.2022 EP 22193740
(43) Date of publication of application: 09.07.2025
(73) Proprietor: Katholieke Universiteit Leuven, KU Leuven R&D, 3000 Leuven (BE)
(72) Inventor: GUIMARAES, Gabriel, 3000 Leuven (BE); SIMIC, Dragan, 3000 Leuven (BE); QUNAJ, Valdrin, 3000 Leuven (BE); VAES, Joren, 3000 Leuven (BE); REYNAERT, Patrick, 3000 Leuven (BE)
(74) Representative: Winger
(86) International application number: PCT/EP2023/074020
(87) International publication number: WO 2024/047224

(56) References cited:
- US-A1- 2020 136 726
- US-A1- 2020 169 444

## Description

### Field of the invention

The present invention is generally related to the field of high frequency signal communication systems. More in particular, it relates to a millimetre-wave communication system for data transmission between two points via a millimetre wave dielectric waveguide.

### Background of the invention

Since a number of years communication links based on optical fibres have increasingly gained attention as an alternative to electrically wired links for high-speed data communication, for instance at transmission signal wavelengths in the range from 200 nm to 2000 nm. While there is a constantly increasing demand for sufficient bandwidth and data rate, the link length for electrical wires is limited by transmission losses, whereas optical links are feasible and widely used for long link lengths. On the other hand, the costs related to conventional optical link solutions quickly increase when laser sources in specialized III-V technology are required, as well as Bragg gratings with microlenses in a precision assembly. Moreover, components like a modulator driver or transimpedance amplifier set a limit on the bandwidth being used. Therefore, optical links become less interesting with decreasing link length.

Since about a decade, communication systems have been introduced wherein next to a pair of transceivers, dielectric waveguides/fibres are employed for transmitting millimetre-wave (mm-wave) signals with low losses. Such a fibre is in the literature also referred to as a polymer mm-wave fibre or PMF. PMF solutions use a mm-wave carrier signal with a frequency in the range from 30 to 300 GHz. Different mm-wave bands have been proposed for high-capacity communication systems. As opposed to optical fibre and optical-to-electrical conversion devices or precise alignment devices, plastic waveguide interconnects do not require costly electrical-to-optical and optical-to electrical conversion devices or precise alignment. Further, they offer long transmission distances due to the good field confinement and low path loss. Multiple plastic waveguides can be used in parallel and the modulated data at different frequencies can be multiplexed to increase the data rate.

PMF uses switching modulators fully integrated in IC technology. Transceivers can be fully electrically implemented in standard chip technology. The relatively large wavelength (compared to optical) allows for the use of on-package or on-printed circuit board (PCB) antennas as couplers to launch the signal into the fibre, without the use of a microlens. The whole assembly is much more tolerant to misalignment and vibration due to the difference of three orders of magnitude between light and mm-wave wavelength.

PMF solutions, however, are faced with quite different channel conditions compared to systems wherein optical fibre is applied. In the latter case only a very small fraction of the optical fibre bandwidth is used for a communication channel, e.g., only 0.01 %. The loss is practically constant over frequency in a single channel and very low. The available signal bandwidth is limited by chromatic dispersion and polarization mode dispersion.

On the contrary, a communication system with a PMF waveguide displays very different channel characteristics. A communication channel in PMF relatively occupies much more of the available bandwidth. For example, the fractional bandwidth of the channel may amount to 18% or more of the dielectric waveguide bandwidth. Further the loss may vary considerably from the lowest to the highest frequencies of the communication channel. If a centre frequency of the communication channel is considered, one can say that the upper sideband and the lower sideband relative to the centre frequency have very different characteristics.

Millimetre-wave transmitters and receivers (transceivers) are known in the art. Such a mm-wave transmitter typically comprises a modulator which receives a carrier signal from an oscillator and modulates it with a data signal. An example can be found in US2017/237457.

In US2020/136726 A1 a mm-wave communication device is disclosed including a coupler, an RF circuit and a composite left/right handed metamaterial assembly. The latter is in some implementations positioned at the transmitter side, in which case the composite left/right handed metamaterial assembly can perform pre-compensation for the distortion created by a waveguide downstream.

Application US2020/169444 A1 relates to dispersion compensation in mm-wave communication over plastic waveguide wherein OFDM modulated signals are transmitted.

Further improvements to communication systems that use a PMF waveguide are therefore needed that account for the particular features of the channel in such systems.

### Summary of the invention

It is an object of embodiments of the present invention to provide for a communication system via a millimetre wave dielectric waveguide that overcomes at least some of the limitations and drawbacks imposed by such a transmission medium.

The above objective is accomplished by the solution according to the present invention.

In a first aspect the invention relates to a communication system operable in the millimetre-wave spectrum comprising
- a transmitter arranged to emit a transmit millimetre-wave signal,
- a polymer millimetre-wave fibre arranged to propagate the transmit millimetre-wave signal,
- a receiver arranged to receive the propagated transmit millimetre-wave signal,
wherein the optical transmitter is arranged to receive an input information signal and comprises :
- an in-phase path and a quadrature path for the input signal,
- modulation means for performing modulation with a millimetre wave carrier signal,
- amplifier means,
- combiner means.
The communication system is characterised in that the in-phase path and the quadrature path each comprise a pre-equalizing filter to filter the input signal before the transmit millimetre-wave signal is obtained by applying the filtered input signal to the modulator means, amplifier means and combiner means.

The proposed solution indeed allows for higher throughput communication in a polymer millimetre-wave fibre waveguide. The channel non-idealities are pre-compensated in the pre-equalizing filters at the transmitter side where an in-phase path and quadrature path are readily available. It is an advantage of the proposed system that the amount of intersymbol interference at the receiver side is reduced or even completely eliminated. It is an advantage of the proposed system that no carrier recovery mechanism is required.

In a preferred embodiment the transmitter comprises a millimetre wave coupler for coupling the transmit millimetre-wave signal to the polymer millimetre-wave fibre. The use of such a millimetre wave coupler is useful in order to avoid electromagnetic power loss.

Preferably the communication system further comprises a clock and data recovery block to derive a clock signal of the input signal. The recovered clock signal may advantageously be used in the pre-equalizing filters.

In some embodiments the modulator means comprise generator means to generate the millimetre wave carrier signal and mixing means to mix the millimetre wave carrier signal with the filtered input signal in the in-phase path and quadrature path, respectively. The combiner means are then preferably adapted for combining the mixed signals in the in-phase path and quadrature path to obtain the transmit millimetre-wave signal. The amplifier means may then be adapted to amplify the combined mixed signals before the transmit millimetre-wave signal is obtained. In advantageous embodiments a voltage controlled oscillator or a multiplier chain and a hybrid coupler are provided.

In a preferred embodiment the amplifier means and the mixing means are part of a RF digital-to-analog converter structure. Use of an RF-DAC structure is advantageous in that amplitude linearity requirements on the signals in the I and Q path can be relaxed.

Advantageously, the filtered input signal in the in-phase path and in the quadrature path, respectively, are combined prior to performing the modulation with the millimetre wave carrier signal. The communication system may then comprise a conversion block wherein amplitude and phase of a signal combined said filtered input signals.

In one embodiment the phase is applied to a phase shifter and the amplitude is applied to the amplifier means. A phase shifter offers the advantage that it displays a highly linear behaviour.

In some embodiments the pre-equalizing filters are digital filters.

In some embodiments the pre-equalizing filters are mixed-signal filters.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.
Fig.1 illustrates a generic scheme of a mm-wave communication system according to the present invention.
Fig.2 illustrates a preferred embodiment of the communication system of the invention.
Fig.3 illustrates a preferred embodiment of the communication system of the invention.
Fig.4 illustrates an alternative embodiment of the communication system of the present invention.
Fig.5 illustrates some simulation results obtained with a set-up as in Fig.2.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention discloses a communication system operable in the millimetre-wave (mm-wave) spectrum. With mm-wave spectrum is meant the frequency spectrum from 30 GHz to 300 GHz and preferably to 500 GHz. A frequency of 30 GHz corresponds to a wavelength of 10 mm, 300 GHz to 1 mm and 500 GHz to 0.6 mm, hence the name mm-wave spectrum.

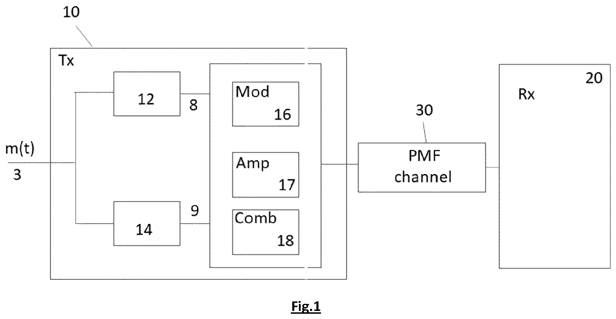

A generic block scheme of a communication system for communication over a mm-wave dielectric waveguide according to the present invention is depicted in Fig.1. The system comprises a transmitter (10) and a receiver (20) connected via the mm-wave dielectric waveguide (30).

A baseband signal m(t) is applied at an input of the transmitter part (10) of the system. In preferred embodiments the baseband signal is a Pulse Amplitude Modulation (PAM) signal. As well known in the art, the information bits to be transmitted are thereby encoded in the amplitude of a series of signal pulses. PAM signals are often considered for use in high-speed data connection links. In other embodiments the baseband signal may be a Pulse Width Modulation (PWM) or a Pulse Code Modulation (PCM) data signal, without being limited thereto.

For high-speed baseband signals carried by a millimetre wave signal an important challenge is to deal with the frequency related power fading and frequency related phase-shift induced by the chromatic dispersion in the dielectric waveguide, that arises from the variation in propagation velocity with wavelength. In the communication system of the present invention this is solved by performing pre-equalization in the transmitter. A pre-equalization filter (12,14) is provided in an in-phase path (8) and in a quadrature path (9), respectively. Each pre-equalization filter has its own filter coefficients and, hence, its own impulse response.

The pre-equalization filters each receive at their input the baseband signal m(t), e.g., a PAM signal. The filtered baseband signal is then fed to the rest of the transmitter scheme, which comprises a modulator, amplification means and a combiner. The modulator modulates the signal received at its input with a millimetre-wave carrier signal. The carrier signal may originate from a voltage controlled oscillator operable for example in the frequency range from 30 GHz to 300 GHz, preferably in the range of 30 GHz to 500 GHz. Alternatively, the carrier signal may be obtained from a multiplier chain, i.e., a chain of frequency multiplying circuits resulting in a mm-wave local oscillator signal. Instead of a multiplier chain, a divider chain or a combination of a multiplier chain and a divider chain can be considered to produce a signal in the frequency range of, e.g., 30 GHz to 300 GHz or 500 GHz from any lower or higher signal frequency. The combiner can be as simple as a summer that makes the sum of the signals coming in from the in-phase and quadrature path, respectively. How the functional blocks are connected and receive the filtered baseband signal, depends on the particular embodiment. Several exemplary embodiments are discussed more in detail below. From these functional blocks results the mm-wave signal to be transmitted.

In preferred embodiments the transmitter block of the communication system typically comprises a clock-and-data recovery (CDR) circuit to recover the clock of the input signal. This allows implementing a discrete-time filter with the recovered clock signal, in particular the pre-equalization filters.

In advantageous embodiments a mm-wave coupler operative in the millimetre frequency range of 30 GHz to 300 GHz, preferably in the range of 30 GHz to 500 GHz, is provided at the output of the transmitter the transmit millimetre-wave signal to couple the transmit millimetre-wave signal to the polymer millimetre-wave fibre.

The mm-wave signal is transmitted in a low-cost piece of polymer, e.g., plastic, dielectric acting as a waveguide. The waveguide can be solid, hollow, contain pockets of other materials, or a combination thereof. The polymer waveguide medium serves as a directive channel to guide the electromagnetic waves and offers a large bandwidth for data communication using mm-wave carrier frequencies. It can be bent and twisted without significant impact on the transmitted signal. Polymer waveguide interconnects do not require costly electrical-to-optical and optical-to-electrical conversion devices or precise alignment and offer long transmission distances due to good field confinement and low path loss at mm-wave frequencies. Multiple plastic waveguides can be used in parallel and the modulated data at different frequencies can be multiplexed to increase the data rate. Various types of plastic can considered for use in PMFs. Example materials may be nonconductive materials such as polypropylene (PP), polyethylene (PE), polytetrafluoethylene (PTFE) and other fluoropolymers, without being limited thereto.

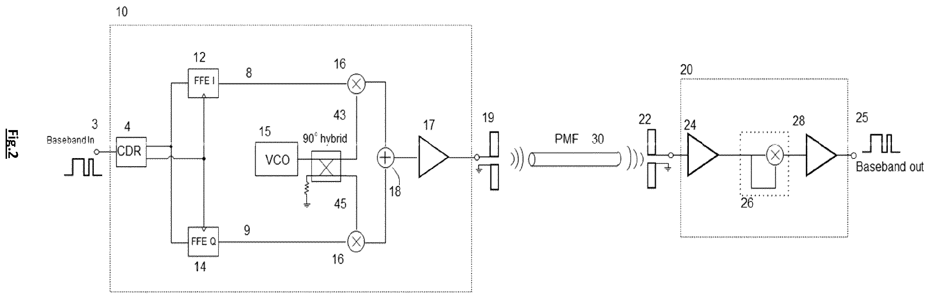

The receiver of the communication system according to this invention is a receiver conventionally encountered in radio communication systems. It can be a non-coherent receiver, wherein no local oscillator signal is used for the demodulation, or a coherent receiver wherein carrier signal recovery is performed or where in some other way the carrier signal is shared between the transmitter and the receiver. In preferred embodiments a mm-wave coupler (22) is provided at the receiver input (see Fig.2). A mm-wave coupler similar to the one that might be used at the transmitter side may be used, although that is no strict requirement. The receiver structure typically comprises a low-noise amplifier (24) to boost the received signal to a sufficiently high level for further processing in a mm-wave detector block (26), which takes care of the demodulation. The resulting baseband signal is then applied to a baseband amplifier (28) to yield the baseband output signal. An alternative receiver implementation can use an intermediate downconversion stage using a fixed local oscillator to an intermediate frequency. The IF signal can then be demodulated as described above.

The filter coefficients of the pre-equalization filters in the in-phase path I and the quadrature path Q are determined so that the complex channel impulse responses hi(t) and hq(t) are pre-compensated for degradations occurring when travelling over the channel and in the receiver block a signal is received without intersymbol interference distortion or with at least a reduced amount of intersymbol interference distortion and can next be demodulated. As well known, the pre-equalization filters (12,14) in fact represent an estimated inverse channel given by a receiver side adaptive equalizer. A channel estimation needs to be performed. In practice the intersymbol interference is often limited to a finite number of samples. Therefore, to equalize a finite impulse response filter with a limited number of taps (symbol spaced taps or fractionally spaced taps) can be employed.

The pre-equalization filter coefficients can be obtained in either an open-loop or a closed loop configuration. In an open-loop configuration the channel frequency response is characterized upfront either through an electromagnetic simulation of the channel or via measurement. Optimal time-domain filter coefficients for a given distance and an ideal impulse response goal can be calculated and loaded into the filters in the transmitter. Alternatively, in a closed-loop configuration the pre-equalization filters are implemented as adaptative filters using, e.g., a state-of-the-art stochastic gradient algorithm based on, e.g., a minimum mean square error (MMSE) criterion, such as a least-mean squares filter (LMS) or recursive least square (RLS) filter or constant modulus algorithm (CMA). The error signal can be obtained for example by observing on an oscilloscope the opening in an eye pattern of the received signal. The error signal has to be fed back to the transmitter through a backchannel. This backchannel can be implemented using the same fibre as the main communication channel or any other means.

As already mentioned, in embodiments of the invention there are many possible ways to connect the main functional blocks in the transmitter (i.e. the modulator (16), amplifier (17), combiner (18)) to which the filtered signals output by the respective pre-equalization filters are fed. Below some preferred embodiments are described in detail.

In Fig.2 the mixed-signal pre-equalization filters (12,14) output an analog signal in the in-phase path (8) and in the quadrature path (9), respectively. Each path comprises an RF upconversion mixer that mixes the analog filter output signal with an in-phase signal (43) and a quadrature signal (45), respectively. The in-phase signal and the quadrature signal can be obtained with conventional means, for example a mm-wave VCO, a multiplier chain or divider chain and a 90° hybrid coupler. The upconverted in-phase and quadrature signals are then combined in an RF combiner (18) and the resulting signal is applied to a linear power amplifier (17) that then outputs the transmit signal.

Via a mm-wave coupler the transmit signal is applied to the PMF (30). At the receiver side there is preferably also a mm-wave coupler (22) provided to couple the signal received from the PMF to the receiver structure. The latter basically comprises the functional blocks already discussed with respect to Fig.1.

The filter coefficients can be determined using an approach already discussed above.

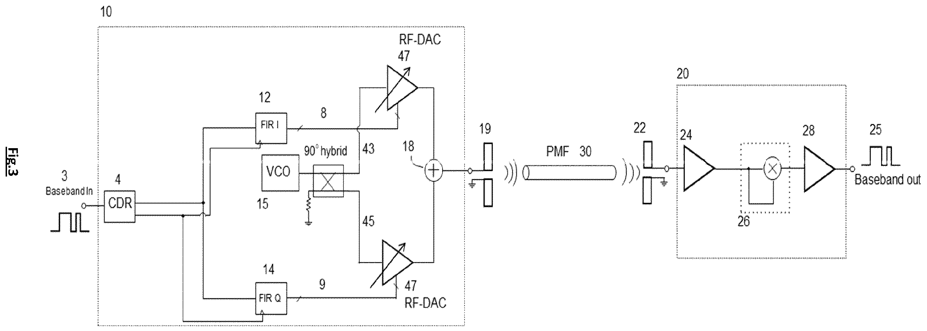

Another preferred architecture of the transmitter of the system of this invention is illustrated in Fig.3. The figure shows a baseband signal coming in and an (optional) clock & data recovery block (4). This block lets the incoming signal pass and reach the pre-equalization filter via the in-phase path and the quadrature path, respectively. The clock & data recovery block, if present, further recovers the clock signal from the input signal and forwards this clock signal to the respective pre-equalization filters. The pre-equalization filters in the embodiment of Fig.3 are finite impulse response filters. In another embodiment infinite impulse response filters may be used. The digital signals output by the pre-equalization filters is then applied to an RF-DAC in each path. The RF-DACs (47) further receive in-phase signal (43) and a quadrature signal (45), respectively. The in-phase signal and the quadrature signal can be obtained with conventional means, as explained before. The RF-DACs each mix the two signals at their input to obtain an RF signal and perform a digital-to-analog conversion. The signals from the I-path and the Q-path are then combined in an RF combiner (18) to obtain the transmit mm-wave signal.

The rest of the scheme is the same as in Fig.2. The transmit signal is applied to the PMF via a mm-wave coupler. At the receiver side there is preferably also a mm-wave coupler provided to couple the signal received from the PMF to the receiver structure. The receiver structure basically comprises the functional blocks already discussed with respect to Fig.1.

Also here the filter coefficients can be determined using an approach already discussed above.

An advantage offered by the scheme of Fig.3 is that the amplitude linearity requirements can be alleviated. In this scheme only constant-amplitude signals flow in the amplification chain, and the signal amplitude is only modified in the stage comprising the RF-DACs. Further, the RF-DACs can be operated in switching mode since the digital-to-analog conversion linearity only depends on the number of devices turned-on or connected to the output, and not on the device intrinsic transconductance linearity. This allows for a better performance in terms of linearity in this architecture.

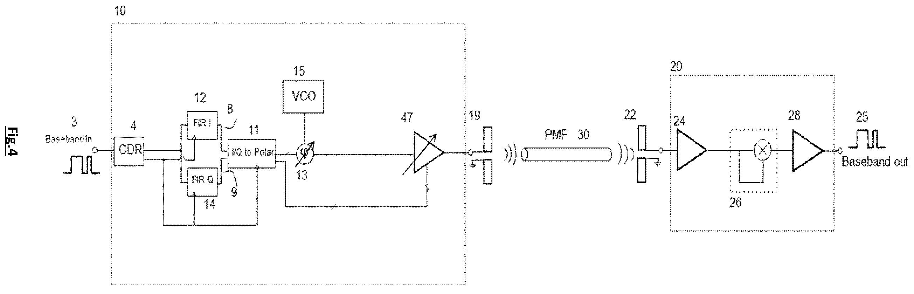

Yet another possible architecture of the transmitter is shown in Fig.4. Again a baseband signal comes in and optionally a clock & data recovery block (4) may be provided. This block lets the incoming signal pass and reach the pre-equalization filter via the in-phase path and the quadrature path, respectively. The clock & data recovery block, if present, further recovers the clock signal from the input signal and forwards this clock signal to the respective pre-equalization filters. The pre-equalization filters (12,14) in the embodiment depicted in Fig.4 are again finite impulse response filters. The in-phase and quadrature filtered digital signals output by the pre-equalization filters are then applied to a block (11) wherein the signals are converted to a polar representation. The phase digital signal in this representation is used to directly modulate the phase of the generated LO signal through a digital phase-shifter circuit (13). The resulting phase-shifted signal is fed to a RF-DAC that modulates the amplitude of the transmitted signal using the amplitude signal calculated in the I/Q to polar block (11). This generates the final signal for transmission.

The rest of the scheme of Fig.4 is the same as in Fig.2. The transmit signal is applied to the PMF (30) via a mm-wave coupler (19). At the receiver side there is preferably also a mm-wave coupler (22) provided to couple the signal received from the PMF to the receiver structure (20). The receiver structure basically comprises the functional blocks already discussed with respect to Fig.1.

Also here the filter coefficients can be determined using an approach already discussed above.

The scheme of Fig.4 may be advantageous in terms of linearity behaviour. This is due to the fact that a digital phase-shifter has a very linear behaviour. Further, this architecture alleviates the need for a combiner after the RF-DAC, allowing its output power to be higher. Therefore, it is well suited to longer distances.

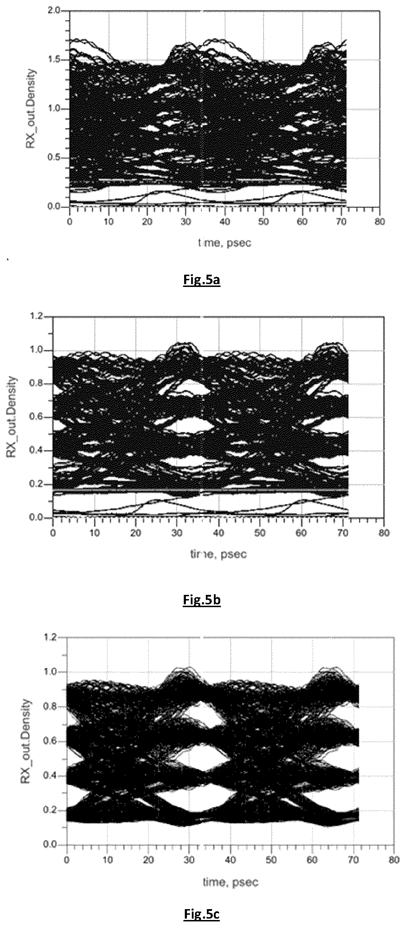

Some simulation results are presented now. A system as depicted in Fig.2 is simulated where the channel is a 7-meter polymer microwave fibre. The transmitter is an IQ transmitter and the receiver a non-coherent receiver with only envelope detection. In both, all blocks are assumed ideal. Therefore, the signal is only affected by the channel response and equalizing filter response. The system transmits a PAM-4 signal with 28 GBaud symbol rate. In Fig. 5a the resulting eye diagrams are presented for the system without any equalization. In this condition the eye diagrams are completely closed, meaning there is a lot of intersymbol interference, and no data can be recovered. In Fig.5b results are shown obtained with a 5-tap equalizing filter. In this case most of the ISI has been compensated, but there is still residual ISI affecting especially the lower eye, which is the most sensitive in a power detection system due to its non-linearity. Finally, in Fig.5c a 10-tap equalizing filter is employed. The channel has been fully compensated. It is evident that the pre-equalization system can compensate for the channel non-idealities and improve the performance and data-rate achievable.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A communication system (1) operable in the millimetre-wave spectrum comprising
- a transmitter (10) arranged to emit a transmit millimetre-wave signal,
- a polymer millimetre-wave fibre (30) arranged to propagate said transmit millimetre-wave signal,
- a receiver (20) arranged to receive the propagated transmit millimetre-wave signal,
wherein said transmitter (10) is arranged to receive an input signal (3) and comprises :
- an in-phase path (5) and a quadrature path (7) for said input signal,
- modulation means (16) for performing modulation with a millimetre wave carrier signal,
- amplifier means (17),
- combiner means (18),
and **characterised in that** said in-phase path and said quadrature path each comprise a pre-equalizing filter (12,14) to filter said input signal prior to obtaining said transmit millimetre-wave signal by applying said filtered input signal to said modulator means, amplifier means and combiner means.

2. Communication system as in claim 1, comprising a millimetre wave coupler (19) for coupling said transmit millimetre-wave signal to said polymer millimetre-wave fibre.

3. Communication system as in claim 1 or 2, further comprising a clock and data recovery block (4) to derive a clock signal of said input signal.

4. Communication system as in any of the previous claims, wherein said modulator means (16) comprise generator means to generate said millimetre wave carrier signal and mixing means to mix said millimetre wave carrier signal with the filtered input signal in said in-phase path and quadrature path, respectively.

5. Communication system as in claim 4, wherein said combiner means (18) are adapted for combining the mixed signals in said in-phase path and quadrature path to obtain said transmit millimetre-wave signal.

6. Communication system as in claim 5, wherein said amplifier means (17) are adapted to amplify the combined mixed signals before said transmit millimetre-wave signal is obtained.

7. Communication system as in claim 5, wherein said amplifier means and said mixing means are part of a RF digital-to-analog converter structure.

8. Communication system as in any of claims 1 to 3, wherein the filtered input signals in the in-phase path and in the quadrature path, respectively, are combined prior to performing said modulation with said millimetre wave carrier signal.

9. Communication system as in claim 8, comprising a conversion block (11) wherein amplitude and phase of said filtered input signals are combined.

10. Communication system as in claim 9, comprising said phase is applied to a phase shifter (13) and said amplitude is applied to said amplifier means (17).

11. Communication system as in any of the previous claims, wherein said pre-equalizing filters (12,14) are digital filters.

12. Communication system as in any of claims 1 to 10, wherein said pre-equalizing filters (12,14) are mixed-signal filters.

## Patentansprüche

1. Ein Kommunikationssystem (1), das im Millimeterwellenspektrum betreibbar ist, umfassend
- einen Sender (10), der angeordnet ist, um ein Sende-Millimeterwellensignal auszusenden,
- eine Millimeterwellen-Polymerfaser (30), die angeordnet ist, um das Sende-Millimeterwellensignal auszubreiten,
- einen Empfänger (20), der angeordnet ist, um das ausgebreitete Sende-Millimeterwellensignal zu empfangen,
wobei der Sender (10) angeordnet ist, um ein Eingangssignal (3) zu empfangen und umfasst:
- einen phasengleichen Pfad (5) und einen Quadraturpfad (7) für das Eingangssignal,
- Modulationsmittel (16) zum Durchführen einer Modulation mit einem Millimeterwellen-Trägersignal,
- Verstärkermittel (17),
- Kombinationsmittel (18),
und **dadurch gekennzeichnet, dass** der phasengleiche Pfad und der Quadraturpfad jeweils einen Vorentzerrungsfilter (12,14) umfassen, um das Eingangssignal vor Erhalten des Sende-Millimeterwellensignals durch Anlegen des gefilterten Eingangssignals an die Modulationsmittel, Verstärkermittel und Kombinationsmittel zu filtern.

2. Kommunikationssystem nach Anspruch 1, umfassend einen Millimeterwellen-Koppler (19) zum Koppeln des Sende-Millimeterwellensignals an die Millimeterwellen-Polymerfaser.

3. Kommunikationssystem nach Anspruch 1 oder 2, weiter umfassend einen Takt- und Datenwiederherstellungsblock (4), um ein Taktsignal aus dem Eingangssignal abzuleiten.

4. Kommunikationssystem nach einem der vorstehenden Ansprüche, wobei die Modulationsmittel (16) Erzeugungsmittel umfassen, um das Millimeterwellen-Trägersignal zu erzeugen und Mischmittel, um das Millimeterwellen-Trägersignal mit dem gefilterten Eingangssignal im phasengleichen Pfad und Quadraturpfad zu mischen.

5. Kommunikationssystem nach Anspruch 4, wobei die Kombinationsmittel (18) zum Kombinieren der gemischten Signale im phasengleichen Pfad und Quadraturpfad angepasst sind, um das Sende-Millimeterwellensignal zu erhalten.

6. Kommunikationssystem nach Anspruch 5, wobei die Verstärkermittel (17) angepasst sind, um die kombinierten gemischten Signale zu verstärken, bevor das Sende-Millimeterwellensignal erhalten wird.

7. Kommunikationssystem nach Anspruch 5, wobei die Verstärkermittel und die Mischmittel Teil einer HF-Digital-Analog-Wandlerstruktur sind.

8. Kommunikationssystem nach einem der Ansprüche 1 bis 3, wobei die gefilterten Eingangssignale im phasengleichen Pfad und im Quadraturpfad jeweils vor Durchführen der Modulation mit dem Millimeterwellen-Trägersignal kombiniert werden.

9. Kommunikationssystem nach Anspruch 8, umfassend einen Umwandlungsblock (11), in dem Amplitude und Phase der gefilterten Eingangssignale kombiniert werden.

10. Kommunikationssystem nach Anspruch 9, umfassend, dass die Phase auf einen Phasenschieber (13) angewendet, und die Amplitude auf die Verstärkermittel (17) angewendet werden.

11. Kommunikationssystem nach einem der vorstehenden Ansprüche, wobei die Vorentzerrungsfilter (12,14) digitale Filter sind.

12. Kommunikationssystem nach einem der Ansprüche 1 bis 10, wobei die Vorentzerrungsfilter (12,14) Mixed-Signal-Filter sind.

## Revendications

1. Un système de communication (1) opérable dans le spectre des ondes millimétriques, comprenant
- un émetteur (10) agencé pour émettre un signal d'onde millimétrique d'émission,
- une fibre millimétrique polymérique (30) agencée pour propager ledit signal d'onde millimétrique d'émission,
- un récepteur (20) agencé pour recevoir le signal d'onde millimétrique d'émission propagé,
dans lequel ledit émetteur (10) est agencé pour recevoir un signal d'entrée (3) et comprend :
- un trajet en phase (5) et un trajet en quadrature (7) pour ledit signal d'entrée,
- des moyens de modulation (16) pour effectuer une modulation avec un signal de porteuse à ondes millimétriques,
- des moyens d'amplification (17),
- des moyens de combinaison (18),
et **caractérisé en ce que** ledit trajet en phase et ledit trajet en quadrature comprennent chacun un filtre de pré-égalisation (12, 14) pour filtrer ledit signal d'entrée avant d'obtenir ledit signal d'onde millimétrique d'émission en appliquant ledit signal d'entrée filtré auxdits moyens de modulation, moyens d'amplification et moyens de combinaison.

2. Système de communication selon la revendication 1, comprenant un coupleur à ondes millimétriques (19) pour coupler ledit signal d'onde millimétrique d'émission à ladite fibre millimétrique polymérique.

3. Système de communication selon la revendication 1 ou 2, comprenant en outre un bloc de récupération d'horloge et de données (4) pour dériver un signal d'horloge dudit signal d'entrée.

4. Système de communication selon l'une quelconque des revendications précédentes, dans lequel lesdits moyens de modulation (16) comprennent des moyens générateurs pour générer ledit signal de porteuse à ondes millimétriques et des moyens de mélange pour mélanger ledit signal de porteuse à ondes millimétriques avec le signal d'entrée filtré dans ledit trajet en phase et dans ledit trajet en quadrature, respectivement.

5. Système de communication selon la revendication 4, dans lequel lesdits moyens de combinaison (18) sont adaptés pour combiner les signaux mélangés dans ledit trajet en phase et dans ledit trajet en quadrature afin d'obtenir ledit signal d'onde millimétrique d'émission.

6. Système de communication selon la revendication 5, dans lequel lesdits moyens d'amplification (17) sont adaptés pour amplifier les signaux mélangés combinés avant que ledit signal d'onde millimétrique d'émission ne soit obtenu.

7. Système de communication selon la revendication 5, dans lequel lesdits moyens d'amplification et lesdits moyens de mélange font partie d'une structure de convertisseur numérique-analogique RF.

8. Système de communication selon l'une quelconque des revendications 1 à 3, dans lequel les signaux d'entrée filtrés dans le trajet en phase et dans le trajet en quadrature, respectivement, sont combinés avant d'effectuer ladite modulation avec ledit signal de porteuse à ondes millimétriques.

9. Système de communication selon la revendication 8, comprenant un bloc de conversion (11) dans lequel l'amplitude et la phase desdits signaux d'entrée filtrés sont combinées.

10. Système de communication selon la revendication 9, dans lequel ladite phase est appliquée à un déphaseur (13) et ladite amplitude est appliquée auxdits moyens d'amplification (17).

11. Système de communication selon l'une quelconque des revendications précédentes, dans lequel lesdits filtres de pré-égalisation (12, 14) sont des filtres numériques.

12. Système de communication selon l'une quelconque des revendications 1 à 10, dans lequel lesdits filtres de pré-égalisation (12, 14) sont des filtres à signaux mixtes.
